# EUROPÄISCHE PATENTSCHRIFT

(11) **EP 3 455 111 B1**
(45) Veröffentlichungstag und Bekanntmachung des Hinweises auf die Patenterteilung: **11.03.2020**
(21) Anmeldenummer: 17723327.7
(22) Anmeldetag: 09.05.2017
(51) Int. Cl.: B60T 8/17, B60T 8/172, B60T 13/68, B60T 17/22

(54) **AUTOMATISIERT KALIBRIERBARES BREMSSYSTEM UND VERFAHREN ZUM AUTOMATISIERTEN KALIBRIEREN EINES BREMSSYSTEMS**
AUTOMATED CALIBRATABLE BRAKE SYSTEM AND METHOD FOR AUTOMATED CALIBRATION OF A BRAKE SYSTEM
SYSTÈME DE FREINAGE À ÉTALONNAGE AUTOMATIQUE ET PROCÉDÉ D'ÉTALONNAGE AUTOMATIQUE D'UN SYSTÈME DE FREINAGE

(30) Priorität: 10.05.2016 DE 102016108597
(43) Veröffentlichungstag der Anmeldung: 20.03.2019
(73) Patentinhaber: KNORR-BREMSE Systeme für Schienenfahrzeuge GmbH, 80809 München (DE)
(72) Erfinder: FISCHER, Marcus, 80469 München (DE); BRÄUNLICH, Marco, 81245 München (DE); HESSLING, Thomas, 80799 München (DE); HARTL, Severin, 82449 Uffing am Staffelsee (DE)
(86) Internationale Anmeldenummer: PCT/EP2017/061010
(87) Internationale Veröffentlichungsnummer: WO 2017/194512

(56) Entgegenhaltungen:
- DE-A1- 19 615 831
- DE-B3-102006 001 551

## Beschreibung

Die Erfindung betrifft ein Verfahren zum automatisierten Kalibrieren eines pneumatischen Bremssystems durch automatisierte Einstellung von Parametern der Bremssteuerung des pneumatischen Bremssystems anhand von pneumatischen Eigenschaften des Bremssystems, die durch Messungen ermittelt werden. Die Erfindung betrifft ferner ein automatisiert kalibrierbares pneumatisches Bremssystem, das ein Verfahren zum automatisierten Kalibrieren durchführen kann.

Die für die Steuerung bzw. Regelung von Bremssystemen verwendeten Parameter der Steuerungs- bzw. Regelungsalgorithmen sind von der jeweiligen Gestaltung des Bremssystems abhängig. Dies ist zum einen durch Normen bzw. länderspezifische Vorgaben, zum anderen insbesondere bei Bremssystemen von Schienenfahrzeugen durch die vorliegende Zuggattung verursacht. Insbesondere werden die für die Steuerung bzw. Regelung des Bremssystems benötigten Parameter der Steuerungs- bzw. Regelungsalgorithmen durch die Konstruktion des Schienenfahrzeuges, in dem das Bremssystem eingesetzt wird, beeinflusst. Die Eigenschaften des Bremssystems, wie beispielsweise Leitungslängen und Leitungsquerschnitte, Biegungen, Volumina und weitere konstruktive Merkmale beeinflussen die Wahl der Parameter der Steuerungs- bzw. Regelungsalgorithmen des Bremssystems. Das Verhalten des Bremssystems wird durch sämtliche im Druckverlauf zwischen der Bremskraft erzeugenden Einheit über die Verrohrung bis hin zum Bremszylinder liegenden Komponenten und die Übergänge zwischen den Komponenten bestimmt. Die im Druckverlauf liegenden Komponenten und die Übergänge zwischen diesen bestimmen die Leistungsfähigkeit und das Verhalten des Bremssystems.

Das Patentdokument DE 10 2006 001551 B3 offenbart ein Verfahren zur Bremsdruckregelung in einer mit Schaltventilen arbeitenden elektropneumatischen Bremsanlage, mit den Schritten: Prüfen, ob eine Regelabweichung zwischen einem Sollwert und einem zurück gekoppelten Schaltsteuerdruck von Schaltventilen, welcher einen Istwert darstellt, einen um diesen Sollwert liegenden Totbereich einer Regeleinrichtung überschreitet; Ausgeben einer erforderlichen Stellgröße von Null, wenn die Regelabweichung den Totbereich der Regeleinrichtung nicht überschreitet; Aufsummieren von Regelabweichungen, die den Totbereich der Regeleinrichtung überschreiten, bis ein vorbestimmter Schwellenwert überschritten wird, und sodann Ausgeben einer erforderlichen Stellgröße ungleich Null zum Erzielen einer erforderlichen Druckänderung; Berechnen von zum Erzielen der erforderlichen Druckänderung erforderlichen Aktivierungszeiten der Schaltventile mittels einer Nichtlinearitäts- Kompensationseinrichtung zur Linearisierung der Regelstrecke in Abhängigkeit von der erforderlichen Druckänderung und einem Versorgungsdruck der Bremsanlage; Berechnen von tatsächlichen Ansteuerzeiten der Schaltventile mittels einer Ventilsteuereinrichtung für jeweils jedes anzusteuernde Schaltventil unter Verwendung einer inversen Ansteuerkennlinie; und Ausgeben der tatsächlichen Ansteuerzeiten an jeweilige Endstufen zur Erzeugung von Ansteuerimpulsen für jedes der einzelnen Schaltventile.

Die Bremssysteme sind vorwiegend zunächst standardisiert ausgeführt. Während der Inbetriebnahme des Systems werden die standardisiert ausgeführten Bremssysteme an die jeweiligen Umstände des Anwendungsfalls angepasst. Das Bremssystem wird hierbei so angepasst, dass bei Betrieb des Bremssystems die geforderten Druckverläufe für Belüftung und Entlüftung erzielt werden können. Dabei wird das Bremssystem unter anderem auch auf die maximal vorkommenden Verläufe angepasst.

In herkömmlichen Anpassungsverfahren werden bei der Anpassung unter anderem pneumatische Widerstände in Form von Düsen in das System eingefügt, welche durch ihre Drosselwirkung das Verhalten des Systems beeinflussen. Dadurch kann ein zunächst standardisiert ausgeführtes Bremssystem individuell an die geforderten Einsatzbedingungen, beispielsweise an das konkrete Schienenfahrzeug, angepasst werden. Des Weiteren werden in der standardisierten Bremssystem-Software Parameter angepasst. Die Anpassung der Parameter kann vorab in der Entwicklung bzw. in der Fertigung erfolgen. Die Parameter können auch in Versuchen direkt am Fahrzeug angepasst werden. Des Weiteren besteht die Möglichkeit, die Systeme vorab bereits während der Entwicklung hinsichtlich ihrer Eigenschaften zu untersuchen und die Parameter der Bremssteuerung bereits vorab während der Entwicklung an die konkreten Umgebungsbedingungen, beispielsweise an die Konstruktion des betrachteten Schienenfahrzeuges, anzupassen. Beide bekannten Methoden, und insbesondere die Einstellung von Parametern direkt am Fahrzeug, erfordern erheblichen Aufwand, um die Steuerung bzw. Regelung des Bremssystems an die konkreten Einsatzbedingungen anzupassen.

Der Erfindung liegt daher die Aufgabe zugrunde, ein Verfahren bereitzustellen, bei dem eine Kalibrierung der Parameter der Bremsdrucksteuerung bzw. der Bremsdruckregelung des pneumatischen Bremssystems direkt vor Ort am Zielsystem automatisiert durchführbar ist.

Diese Aufgabe wird durch ein Verfahren zum automatisierten Kalibrieren eines pneumatischen Bremssystems mit den Merkmalen des Anspruchs 1 sowie durch ein automatisiert kalibrierbares pneumatisches Bremssystem mit den Merkmalen des Anspruchs 10 gelöst. Weitere Merkmale der Erfindung ergeben sich aus den Unteransprüchen.

Im erfindungsgemäßen Verfahren zum automatisierten Kalibrieren eines pneumatischen Bremssystems wird zunächst der Bremszylinder des pneumatischen Bremssystems mit bekanntem Öffnungsgrad eines dem Bremszylinder zugeordneten Ventils belüftet. Dabei ist auch die Öffnungsdauer des Ventils bekannt. Bei dem bekannten Öffnungsgrad des Ventils kann es sich beispielsweise um die maximal mögliche Ventilöffnung handeln, beispielsweise um einen vollen Öffnungshub. Aber auch andere Öffnungsgrade der Ventilstellung sind möglich.

Das Bremssystem kann auch mehrere Bremszylinder aufweisen, denen jeweils ein Ventil zugeordnet ist, oder es kann ein Ventil auch mehreren Bremszylindern zugeordnet sein. Das erfindungsgemäße Verfahren ist bei Bremssystemen mit einem oder mehreren Bremszylindern und mit jeweils einem einem Bremszylinder zugeordneten Ventil oder mit einem mehreren Bremszylindern zugeordneten Ventil gleichermaßen anwendbar.

Im Anschluss daran wird der Druckanstieg am Ventil oder im Bremszylinder gemessen. Es kann auch der Druckanstieg am Ventil sowie im Bremszylinder gleichzeitig gemessen werden. Alternativ ist auch eine Messung entlang des pneumatischen Wirkpfades zwischen Ventil und Bremszylinder möglich. Dabei kann die Messung an einer Stelle entlang des pneumatischen Wirkpfades zwischen Ventil und Bremszylinder durchgeführt werden, oder auch an mehreren Stellen. Es wird die Zeit ermittelt, nach der sich ein stabiler Zustand des Druckes am Ventil oder im Bremszylinder oder entlang des pneumatischen Wirkpfades zwischen Ventil und Bremszylinder einstellt. Anhand des gemessenen Druckanstieges werden die pneumatischen Eigenschaften des Belüftungskreises ermittelt. Dabei werden Softwaremodelle des Bremssystems verwendet.

Des Weiteren wird der Bremszylinder des pneumatischen Bremssystems mit bekanntem Öffnungsgrad des dem Bremszylinder zugeordneten Ventils entlüftet. Auch hier ist die Öffnungsdauer des Ventils bekannt. Dabei wird der Druckabfall am Ventil oder im Bremszylinder gemessen, und es wird die Zeit ermittelt, nach der sich ein stabiler Zustand des Druckes am Ventil oder im Bremszylinder einstellt. Auch hier kann der Druckabfall auch am Ventil sowie im Bremszylinder gleichzeitig gemessen werden. Alternativ ist auch hier eine Messung entlang des pneumatischen Wirkpfades zwischen Ventil und Bremszylinder möglich. Die pneumatischen Eigenschaften des Entlüftungskreises werden anhand des gemessenen Druckverlaufs und der Zeit, nach der sich der stabile Zustand einstellt, ermittelt. Dabei werden Softwaremodelle des Bremssystems verwendet. Nach Durchführung der Messungen und Ermittlung der pneumatischen Eigenschaften werden die Parameter der Bremssteuerung bzw. der Bremsregelung des pneumatischen Bremssystems anhand der gemessenen Daten, der ermittelten pneumatischen Eigenschaften des Belüftungskreises und des Entlüftungskreises sowie der Softwaremodelle des Bremssystems eingestellt.

Der stabile Zustand des Druckes am Ventil oder im Bremszylinder oder im pneumatischen Wirkpfad zwischen Ventil und Bremszylinder im Anschluss an das Belüften bzw. das Entlüften ist dadurch gekennzeichnet, dass sich ein stationärer bzw. nahezu stationärer Druckverlauf eingestellt hat und der Druckverlauf lediglich noch geringfügige Schwankungen aufweist. Zur Bestimmung, wann der stationäre Zustand erreicht ist, können verschiedene Schwellwerte für die im System noch auftretenden Druckschwankungen angewandt werden. Diese Schwellwerte können abhängig von den Verfahren, die zur Anpassung der Parameter der Bremssteuerung bzw. der Bremsregelung eingesetzt werden, gewählt werden.

Die ermittelten pneumatischen Eigenschaften des Belüftungskreises und des Entlüftungskreises werden durch die üblichen Parameter gekennzeichnet, beispielsweise den pneumatischen Widerstand oder das Durchflussverhalten oder den pneumatischen Leitwert der jeweiligen pneumatischen Kreise. Zur Ermittlung der pneumatischen Eigenschaften des Belüftungskreises und des Entlüftungskreises werden Softwaremodelle des Bremssystems verwendet. Diese Softwaremodelle können mathematische Modelle sein, die es ermöglichen, aus den gemessenen Druckverläufen und der Zeit, nach der sich ein stabiler Zustand des Druckverlaufs am Ventil, im Bremszylinder oder in den Leitungen einstellt, die genannten Parameter, die die pneumatischen Eigenschaften des Belüftungskreises und des Entlüftungskreises kennzeichnen, zu ermitteln.

Nach Ermittlung der pneumatischen Eigenschaften des Belüftungs- und des Entlüftungskreises anhand der Messungen werden die Parameter der Bremssteuerung bzw. der Bremsregelung des pneumatischen Bremssystems an das konkrete Bremssystem angepasst. Die Anpassung der Parameter der Bremssteuerung bzw. Bremsregelung erfolgt anhand der gemessenen Daten und insbesondere anhand der ermittelten pneumatischen Eigenschaften des Belüftungskreises und des Entlüftungskreises. Für die Einstellung der Parameter können auch die Softwaremodelle des Bremssystems herangezogen werden. Die Einstellung der Parameter der Bremssteuerung bzw. Bremsregelung erfolgt dabei durch das pneumatische Bremssystem selbsttätig im Anschluss an die Durchführung der Messungen im Zuge einer Parameteradaption bzw. Parameteroptimierung. Zur Einstellung der Parameter können bekannte Verfahren zur Ermittlung der Reglerparameter herangezogen werden, in Abhängigkeit der verwendeten Regelungs- bzw. Steueralgorithmen. So können bei einfachen Reglern, beispielsweise bei PI-Reglern, die bekannten Verfahren, die eine Optimierung der Reglerparameter beispielsweise anhand von Sprungantworten der Regelstrecke durchführen, verwendet werden. Wird eine modellbasierte Regelung bzw. Steuerung verwendet, können beispielsweise die Modellparameter der modellbasierten Regelung anhand der gemessenen Druckverläufe und der daraus ermittelten pneumatischen Eigenschaften des Belüftungskreises und des Entlüftungskreises angepasst werden, so dass das Bremssystem durch die Bremssteuerung bzw. -regelung im Betrieb ein gewünschtes Verhalten der Druckregelung aufweist.

Die für die Parameteranpassung erforderlichen Daten, die in der Software abgebildeten Modelle des Systems, die Regelungs- bzw. Steuerungsalgorithmen und die Parameter der Bremssteuerung sowie die Parameter, die die pneumatischen Eigenschaften des Belüftungskreises und des Entlüfungskreises kennzeichnen, sind im Bremssystem in einem Speicher abgelegt.

Mit einem erfindungsgemäßen Verfahren zum automatisierten Kalibrieren eines pneumatischen Bremssystems kann eine automatisierte Kalibrierung der pneumatischen Bremsdrucksteuerung bzw. der pneumatischen Bremsdruckregelung direkt vor Ort am Zielsystem erfolgen. Eine Kalibrierung während der Entwicklung oder der Fertigung oder eine manuell durchzuführende Kalibrierung am Fahrzeug bei der Inbetriebnahme kann somit entfallen, wodurch Entwicklungszeit sowie Entwicklungskosten eingespart werden können.

In einer weiteren vorteilhaften Ausgestaltung weist das pneumatische Bremssystem des Fahrzeugs mehrere Bremszylinder und den Bremszylindern zugeordnete Ventile auf. Die Messungen des Druckanstiegs und des Druckabfalls werden an den mehreren Ventilen oder in den mehreren Bremszylindern oder in den Leitungen zwischen diesen vorgenommen. Anhand der Messungen werden die pneumatischen Eigenschaften der Belüftungskreise und der Entlüfungskreise der mehreren Bremszylinder ermittelt, und die Parameter der verschiedenen Regel- bzw. Steuerkreise für die verschiedenen Bremszylinder des Bremssystems werden anhand der gemessenen Daten, der ermittelten pneumatischen Eigenschaften des Belüftungskreises und des Entlüfungskreises sowie der Softwaremodelle des Bremssystems angepasst.

In einer weiteren vorteilhaften Ausgestaltung der Erfindung werden die Messungen des Druckanstiegs und des Druckabfalls sowohl am Ventil bzw. den mehreren Ventilen als auch am Bremszylinder bzw. den mehreren Bremszylindern des pneumatischen Bremssystems vorgenommen. Hierfür sind sowohl an den Ventilen als auch an den Bremszylindern Vorrichtungen zum Messen der Druckverläufe vorzusehen. Durch die Messungen auch an dem oder den Bremszylinder(n) zusätzlich zu den Messungen an den Ventilen können weitere Daten aufgenommen werden, um beispielsweise genauere Parameter der pneumatischen Eigenschaften des Belüftungskreises und des Entlüfungskreises zu ermitteln bzw. eine genauere Ermittlung der Parameter der Bremssteuerung, beispielsweise bei einer modellbasierten Regelung, zu ermöglichen.

In einer alternativen Ausgestaltung der Erfindung werden anstelle der Messungen des Druckanstiegs und des Druckabfalls am Ventil und/oder am Bremszylinder Bremsmomente an einem oder mehreren Rädern bzw. Radsätzen gemessen, und die Eigenschaften des Belüftungskreises und des Entlüftungskreises werden anhand des gemessenen Bremsmoments bzw. der gemessenen Bremsmomente bestimmt. Die Ermittlung des Bremsmoments kann beispielsweise durch Messungen vorgenommen werden. Aus dem gemessenen Bremsmoment kann auf Parameter des Be- bzw. Entlüfungskreises zurückgeschlossen werden, oder die Bestimmung von Parametern der Bremssteuerung erfolgt direkt anhand des gemessenen Bremsmomentes.

In einer weiteren vorteilhaften Ausgestaltung werden die Messungen der Druckverläufe bzw. Bremsmomente auch für während des Betriebes vorkommende Schaltstellungen der Ventile vorgenommen. Beispielsweise können die Messungen auch neben beliebigen bekannten Öffnungsgraden oder einem vollen Öffnungshub und einem vollen Entlüftungshub bei unterschiedlichen Öffnungsgraden vorgenommen werden, insbesondere bei Öffnungsgraden, die typischerweise im Betrieb vorkommen. Dadurch können weitere Daten erfasst werden; aufgrund der zusätzlichen Daten kann die Einstellung von Parametern der Bremssteuerung weiter verbessert werden.

In einer weiteren vorteilhaften Ausgestaltung des Verfahrens werden die Messungen der Druckverläufe bzw. Bremsmomente auch für während des Betriebes vorkommende Steuerungs- oder Regelungsroutinen der Ventile vorgenommen. Bei den während des Betriebes vorkommenden Steuerungs- bzw. Regelungsroutinen kann es sich beispielsweise um ein Pulsen des Druckes im pneumatischen Bremssystem handeln.

In einer weiteren vorteilhaften Ausgestaltung des erfindungsgemäßen Verfahrens werden die Ventileigenschaften sowie die aktuelle Leistungsfähigkeit des lokalen Bremssystems an übergeordnete Komponenten und Regelungen gemeldet. Die Ventileigenschaften und die aktuelle Leistungsfähigkeit des lokalen Bremssystems werden dabei durch die pneumatischen Eigenschaften, die durch die Messungen bestimmt werden, gekennzeichnet. Die im vorliegenden Verfahren bestimmten Ventileigenschaften und die aktuelle Leistungsfähigkeit des lokalen Bremssystems können beispielsweise an eine Regelung gemeldet werden, die die Bremskraftverteilung im Fahrzeug vornimmt.

In einer weiteren Ausgestaltung des erfindungsgemäßen Verfahrens wird das automatisierte Kalibrieren des pneumatischen Bremssystems während der Inbetriebnahme eines mit dem Bremssystem versehenen Fahrzeugs vorgenommen. Dadurch wird eine Kalibrierung während der Entwicklung oder eine manuelle Kalibrierung am Fahrzeug während der Inbetriebnahme ersetzt, wodurch Entwicklungszeit und Entwicklungskosten eingespart werden können.

In einer vorteilhaften Ausgestaltung des erfindungsgemäßen Verfahrens wird das automatisierte Kalibrieren des pneumatischen Bremssystems während der Bremsprobe eines mit dem Bremssystem versehenen Fahrzeugs vorgenommen. Dadurch wird eine wiederholte Kalibrierung des Systems während des Betriebes durchgeführt. Die automatisierte Kalibrierungsroutine wird dann jeweils während des Hochfahrens des Bremssystems während der Bremsprobe durchgeführt. Dadurch können Veränderungen am System, die während des laufenden Betriebs eintreten, beispielsweise durch Verschleiß oder äußere Einflüsse, automatisch mit berücksichtigt werden.

Ein erfindungsgemäßes automatisiertes kalibrierbares pneumatisches Bremssystem weist wenigstens einen Bremszylinder, wenigstens ein dem Bremszylinder zugeordnetes Ventil, einen Belüftungskreis des Bremssystems, einen Entlüftungskreis des Bremssystems, Messvorrichtungen zum Messen von Druckverläufen am Ventil und/oder am Bremszylinder und/oder entlang des pneumatischen Wirkpfads zwischen Ventil und Bremszylinder, Softwaremodelle des Bremssystems sowie eine Bremssteuerung zum Steuern bzw. Regeln des Bremssystems auf. Es weist ferner eine Speichervorrichtung auf, in der die mit den Messvorrichtungen aufgenommenen Messdaten, die Softwaremodelle und ihre Parameter, die Parameter des Belüftungskreises und des Entlüftungskreises, die Regelungs- bzw. Steuerungsalgorithmen der Bremssteuerung bzw. Bremsregelung sowie ihre Parameter abgespeichert werden können. Das automatisiert kalibrierbare Bremssystem ist dabei so ausgestaltet, dass es ein erfindungsgemäßes Verfahren zum automatisierten Kalibrieren durchführen kann. Hierfür weist das erfindungsgemäße automatisiert kalibrierbare Bremssystem insbesondere eine Vorrichtung zum Anpassen der Parameter der Bremssteuerung anhand der gespeicherten Daten auf. Bei dieser Vorrichtung kann es sich beispielsweise um einen Berechnungsalgorithmus handeln, der aus den gespeicherten Daten Parameter eines PI-Reglers oder einer modellbasierten Regelung bestimmt.

In einer alternativen Ausgestaltung weist das automatisiert kalibrierbare Bremssystem anstelle der Messvorrichtungen zum Messen von Druckverläufen am Ventil und/oder am Bremszylinder Messvorrichtungen zum Messen des Bremsmoments bzw. mehrerer Bremsmomente auf, und die Ermittlung der Eigenschaften des Belüftungskreises und des Entlüftungskreises erfolgt anhand des gemessenen Bremsmoments bzw. der gemessenen Bremsmomente. Hierbei werden Berechnungsalgorithmen verwendet, die aus dem gemessenen Bremsmoment bzw. dem Verlauf des gemessenen Bremsmomentes bei Öffnen bzw. Schließen des dem Bremszylinder zugeordneten Ventils die Eigenschaften des Belüftungskreises und des Entlüfungskreises ermitteln, insbesondere anhand von in der Software abgebildeten Modellen des Systems.

Ausführungsbeispiele der Erfindung werden nachfolgend anhand der beigefügten Zeichnungen beschrieben. Darin zeigen, zum Teil schematisch,
Fig. 1: ein Fahrzeug mit einem automatisiert kalibrierbaren pneumatischen Bremssystem,
Fig. 2: Abläufe während der Entwicklung und des Betriebs des Bremssystems,
Fig. 3: den Ablauf des Verfahrens zum automatisierten Kalibrieren des pneumatischen Bremssystems.

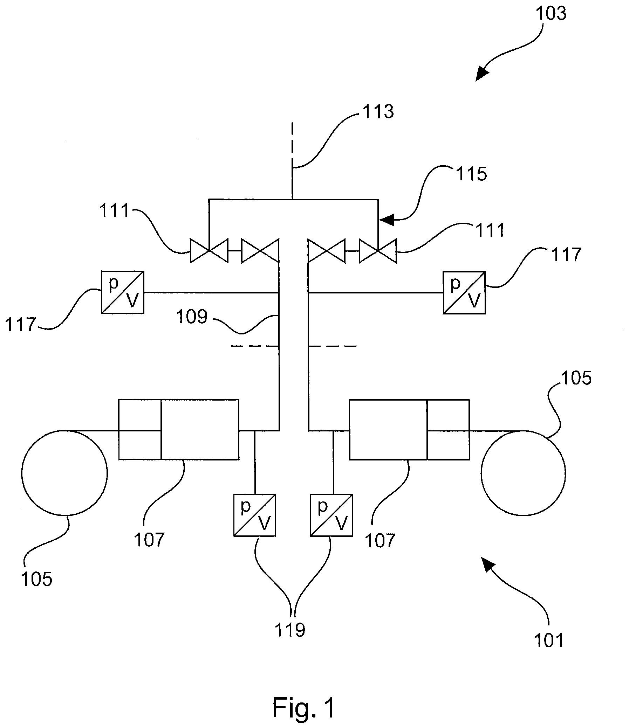

**Fig. 1** zeigt ein Fahrzeug, hier ein Schienenfahrzeug, das mit einem automatisiert kalibrierbaren pneumatischen Bremssystem 101 ausgerüstet ist.

Das in Figur 1 dargestellte automatisiert kalibrierbare pneumatische Bremssystem 101 gemäß einer Ausführung der Erfindung ist in einem Wagenkasten 103 bzw. an einem Drehgestell eines Schienenfahrzeuges angeordnet. Es weist in der in Fig. 1 dargestellten Ausführung zwei pneumatische Bremszylinder 107 auf, die eine Bremswirkung auf Wagenräder 105 ausüben. Die Bremszylinder 107 werden über eine Druckleitung 109 mit Druckluft versorgt und dabei durch Bremsventile 111 angesteuert. Die Bremsventile 111 werden durch eine Bremssteuerung 115 angesteuert bzw. geregelt und durch eine Druckversorgung 113 mit Luftdruck versorgt. Der Druckverlauf an den Ventilen 111 wird durch Druckmesseinrichtungen 117 gemessen.

In der in Fig. 1 dargestellten Ausführung des automatisiert kalibrierbaren pneumatischen Bremssystems 101 wird zusätzlich auch der Druckverlauf an den Bremszylindern 107 durch Druckmesseinrichtungen 119 gemessen.

Durch die Bremssteuerung 115 wird das erfindungsgemäße Verfahren zum automatisierten Kalibrieren der Parameter in den Algorithmen der Bremssteuerung bzw. der Bremsregelung durchgeführt.

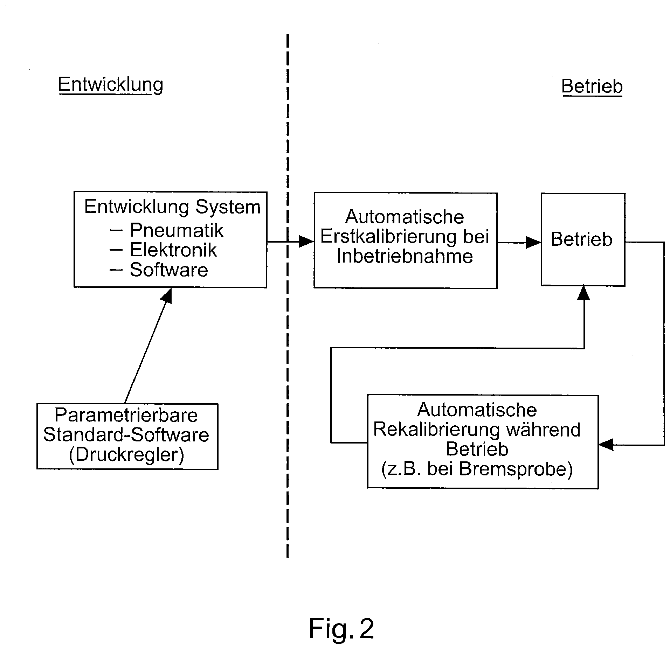

**Fig. 2** zeigt den Ablauf bei der Fertigung bzw. der Inbetriebnahme des automatisiert kalibrierbaren pneumatischen Bremssystems. Während der Entwicklung wird eine parametrierbare Standardsoftware entwickelt, mit der eine Druckregelung durchgeführt in einem pneumatischen Bremssystem durchgeführt werden kann. Die Standardsoftware ist so gestaltet, dass sie dafür geeignet ist, in pneumatischen Bremssystemen verschiedener geometrischer Ausgestaltung, beispielsweise verschiedener Leitungslängen, Bremszylinderdurchmesser und -volumina, eine Steuerung oder eine Regelung einer geforderten Druckänderung durchzuführen. Die Standardsoftware muss, um die Anforderungen an die Steuerung bzw. Regelung zu erfüllen, d.h. insbesondere gewünschte Druckverläufe im System zu erzielen, durch Anpassung ihrer Parameter an das konkrete Bremssystem angepasst werden. Dies erfolgt durch Kalibrierung bzw. Applikation, die bislang entweder während der Entwicklung oder während der Inbetriebnahme des Fahrzeuges manuell durchgeführt werden.

Die für die Steuerung bzw. Regelung von Bremssystemen verwendeten Parameter der Steuerungs- bzw. Regelungsalgorithmen, die an das konkrete Bremssystem angepasst werden müssen, sind von der jeweiligen Gestaltung des Bremssystems abhängig. Die für die Steuerung bzw. Regelung des Bremssystems benötigten Parameter der Steuerungs- bzw. Regelungsalgorithmen werden insbesondere durch die Konstruktion des Schienenfahrzeuges, in dem das Bremssystem eingesetzt wird, beeinflusst. Beispielsweise beeinflussen Leitungslängen und Leitungsquerschnitte, Biegungen, Volumina und weitere konstruktive Merkmale die Wahl der Parameter der Steuerungs- bzw. Regelungsalgorithmen des Bremssystems. Das Verhalten des Bremssystems wird dabei durch sämtliche im Druckverlauf zwischen der bremskrafterzeugenden bzw. bremsdruckerzeugenden Einheit über die Verrohrung bis hin zum Bremszylinder liegenden Komponenten und die Übergänge zwischen den Komponenten bestimmt. Die im Druckverlauf liegenden Komponenten und die Übergänge zwischen diesen bestimmen die Leistungsfähigkeit und das Verhalten des Bremssystems. Dabei sind die Bremssysteme zunächst vorwiegend standardisiert ausgeführt.
Die parametrierbare Standardsoftware für die Druckregelung wird während der Entwicklung des Systems, bei dem die Pneumatik und die Elektronik des Bremssystems entwickelt werden, in die im Bremssystem vorhandene Software implementiert.

Nach Fertigstellung des Fahrzeuges erfolgt die Inbetriebnahme. Während der Inbetriebnahme des Systems werden die standardisiert ausgeführten Bremssysteme an die jeweiligen Umstände des Anwendungsfalls angepasst. Das Bremssystem und seine Steuerung bzw. Regelung wird hierbei so angepasst, dass bei Betrieb des Bremssystems die geforderten Druckverläufe für Belüftung und Entlüftung erzielt werden können. Dabei wird das Bremssystem unter anderem auch auf die maximal vorkommenden Verläufe angepasst.

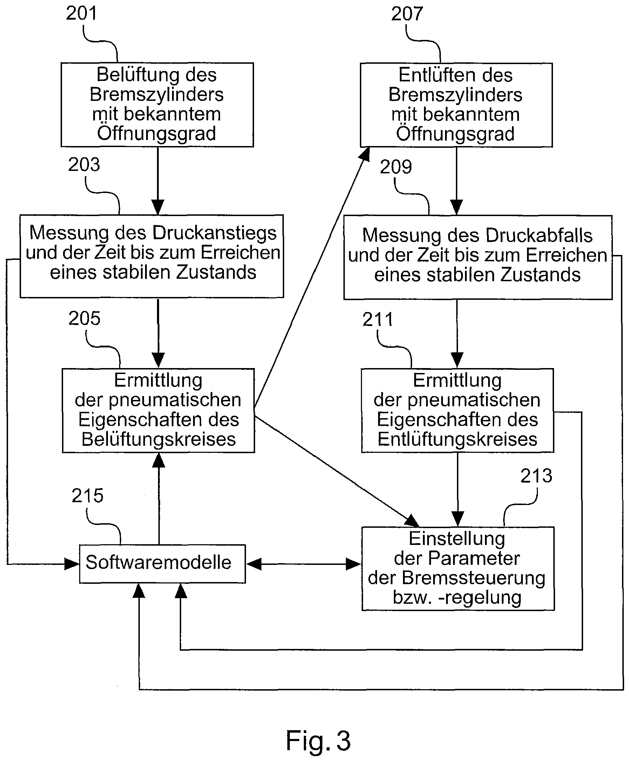

In bisherigen Systemen werden bei der Inbetriebnahme die Parameter der Standardsoftware für den Druckregler durch Versuche im Rahmen einer Applikation bzw. Kalibrierung so angepasst, dass der Druckregler das gewünschte Steuerungs- bzw. Regelungsverhalten für das konkrete Bremssystem aufweist, und insbesondere gewünschte Druckverläufe im System einregelt. Gemäß der vorliegenden Erfindung erfolgt die Erstkalibrierung bei Inbetriebnahme nun jedoch nicht mehr manuell, sondern automatisiert durch das erfindungsgemäße Verfahren zur automatischen Kalibrierung des pneumatischen Bremssystems, wie es in Fig. 3 beschrieben wird. Nach der Kalibrierung ist das System einsatzfähig, und das Bremssystem erfüllt die gestellten Anforderungen, beispielsweise betreffend Verlauf und Höhe der Bremskraft.

Darüber hinaus ist es in der in Fig. 2 dargestellten Ausführung des automatisiert kalibrierbaren pneumatischen Bremssystems möglich, eine automatische Rekalibrierung auch während des Betriebes durchzuführen. Dies erfolgt insbesondere nach Zusammenstellen eines Zuges oder nach längerer Standzeit während der Bremsprobe vor Abfahrt des Zuges. Bei der automatischen Rekalibrierung werden die Parameter der Standardsoftware des Druckreglers jeweils neu bestimmt und damit an den aktuellen Systemzustand angepasst, so dass beispielsweise auch Verschleiß oder Änderungen der Systemkonfiguration berücksichtigt werden, und damit für jeden Systemzustand eine optimale Druckregelung durch die Bremssteuerung erzielt wird.

**Fig. 3** zeigt den Ablauf des Verfahrens zur automatisierten Kalibrierung eines pneumatischen Bremssystems, wie es beispielsweise in Fig 1 dargestellt ist.

Zunächst wird der Bremszylinder 107 mit bekanntem Öffnungsgrad, beispielsweise einem vollem Öffnungshub des dem Bremszylinder 107 zugeordneten Ventils 111 belüftet, 201. Dadurch steigt im Bremszylinder 107 und am Ventil 111 der Druck an. Der Druckanstieg am Ventil 111, und in der in Fig. 1 dargestellten Ausführung auch am Bremszylinder 107, wird gemessen, 203. Dabei wird ferner auch bestimmt, wann der Druck sich nicht mehr oder nur noch geringfügig ändert und damit einen stabilen oder nahezu stabilen Zustand erreicht hat.

Im nächsten Schritt werden aufgrund der Messungen die pneumatischen Eigenschaften des Belüftungskreises, bzw. dessen pneumatischer Widerstand, pneumatischer Leitwert oder Durchflussverhalten ermittelt. Für die Ermittlung der pneumatischen Eigenschaften des Belüftungskreises wird auf Softwaremodelle 215 zurückgegriffen, die in einem Speicher der Bremssteuerung 115 abgespeichert sind.

Im nächsten Schritt wird der Bremszylinder entlüftet, 207, indem das Ventil 111 mit bekanntem Öffnungsgrad für das Entlüften gesteuert wird, beispielsweise in den vollen Entlüftungshub.

Beim Entlüften wird der Druckabfall am Ventil 111 gemessen, 209, in der Ausführung des automatisiert kalibrierbaren Bremssystems 101 nach Fig. 1 auch der Druckabfall am Bremszylinder 107, und es wird auch hier die Zeit ermittelt, nach der sich der Druck nur noch geringfügig bzw. nicht mehr ändert und ein stabiler Zustand erreicht wurde.

Der stabile Zustand des Druckes am Ventil 111 bzw. im Bremszylinder 107 im Anschluss an das Belüften bzw. das Entlüften ist dadurch gekennzeichnet, dass sich ein stationärer bzw. nahezu stationärer Druckverlauf eingestellt hat und der Druckverlauf lediglich noch geringfügige Schwankungen aufweist. Zur Bestimmung, wann der stationäre Zustand erreicht ist, können verschiedene Schwellwerte für die im System noch auftretenden Druckschwankungen angewandt werden. Diese Schwellwerte können abhängig von den Verfahren, die zur Anpassung der Parameter der Bremssteuerung bzw. der Bremsregelung 115 eingesetzt werden, gewählt werden.

Aufgrund der Messungen beim Entlüften des Bremszylinders 107 werden dann die pneumatischen Eigenschaften des Entlüfungskreises ermittelt. Dabei wird wieder auf die Softwaremodelle 215 des Bremssystems 101 zurückgegriffen, um beispielsweise pneumatische Widerstände, den pneumatischen Leitwert oder das Durchflussverhalten des Entlüftungskreises zu ermitteln. Diese Softwaremodelle können mathematische Modelle sein, die es ermöglichen, aus den gemessenen Druckverläufen und der Zeit, nach der sich ein stabiler Zustand des Druckverlaufs am Ventil 111 bzw. im Bremszylinder 107 einstellt, die genannten Parameter, die die pneumatischen Eigenschaften des Belüftungskreises und des Entlüftungskreises kennzeichnen, zu ermitteln.

Das pneumatische Bremssystem 101 des Fahrzeugs kann mehrere Bremszylinder 107 und den Bremszylindern 107 zugeordnete Ventile 115 aufweisen, wie beispielsweise in Fig. 1 dargestellt. Die Messungen des Druckanstiegs und des Druckabfalls werden dann an den mehreren Ventilen 115 vorgenommen, und anhand der Messungen werden die pneumatischen Eigenschaften der Belüftungskreise und der Entlüfungskreise der mehreren Bremszylinder 107 ermittelt. Die Messungen des Druckanstiegs und des Druckabfalls können zusätzlich auch am Bremszylinder bzw. den mehreren Bremszylindern 107 des pneumatischen Bremssystems 101 vorgenommen werden, wie ebenfalls in Fig. 1 dargestellt. Hierfür sind dann wie im Ausführungsbeispiel gemäß Fig. 1 auch an den Bremszylindern 107 Vorrichtungen zum Messen der Druckverläufe vorzusehen.

Die Messungen der Druckverläufe bzw. Bremsmomente können auch für während des Betriebes vorkommende Schaltstellungen der Ventile vorgenommen werden. Dabei können die Messungen auch neben Messungen bei vollem Öffnungshub und vollem Entlüftungshub als bekanntem Öffnungsgrad auch bei unterschiedlichen Hüben vorgenommen werden, insbesondere bei Hüben, die typischerweise im Betrieb vorkommen. Die Messungen der Druckverläufe bzw. Bremsmomente können auch für während des Betriebes vorkommende Steuerungs- oder Regelungsroutinen der Ventile vorgenommen werden, bei denen es sich beispielsweise um ein Pulsen des Druckes im pneumatischen Bremssystem handeln kann.

Anstelle der Messungen des Druckanstiegs und des Druckabfalls am Ventil 111 bzw. im Bremszylinder 107 können auch Bremsmomente an einem oder mehreren Rädern 105 bzw. Radsätzen gemessen, Die Eigenschaften des Belüftungskreises und des Entlüftungskreises werden dann anhand des gemessenen Bremsmoments bzw. der gemessenen Bremsmomente bestimmt. Auch aus dem gemessenen Bremsmoment kann auf Parameter des Be- bzw. Entlüfungskreises zurückgeschlossen werden, oder die Bestimmung von Parametern der Bremssteuerung erfolgt direkt anhand des gemessenen Bremsmomentes.

Im abschließenden Schritt 213 werden dann durch Algorithmen zur Parameteroptimierung bzw. durch Algorithmen zur automatisierten Bestimmung von Reglerparametern aus Modellparametern Parameter der Bremssteuerung 115 bzw. Bremsregelung aus den ermittelten pneumatischen Eigenschaften des Belüftungskreises und den ermittelten pneumatischen Eigenschaften des Entlüfungskreises bestimmt. Dabei kann in diesem Schritt 213 ebenfalls auf die Softwaremodelle 215 zugegriffen werden, ggf. auch auf die gemessenen Druckverläufe. Die Einstellung der Parameter der Bremssteuerung bzw. Bremsregelung 115 erfolgt dabei durch das pneumatische Bremssystem 101 selbsttätig im Anschluss an die Durchführung der Messungen im Zuge einer Parameteradaption bzw. Parameteroptimierung. Zur Einstellung der Parameter können bekannte Verfahren zur Ermittlung der Reglerparameter herangezogen werden, in Abhängigkeit der verwendeten Regelungs- bzw. Steueralgorithmen. So können bei einfachen Reglern, beispielsweise bei PI-Reglern, die bekannten Verfahren, die eine Optimierung der Reglerparameter beispielsweise anhand von Sprungantworten der Regelstrecke durchführen, verwendet werden. Wird eine modellbasierte Regelung bzw. Steuerung verwendet, können beispielsweise die Modellparameter der modellbasierten Regelung anhand der gemessenen Druckverläufe und der daraus ermittelten pneumatischen Eigenschaften des Belüftungskreises und des Entlüftungskreises angepasst werden, so dass das Bremssystem durch die Bremssteuerung bzw. -regelung 115 im Betrieb ein gewünschtes Verhalten der Druckregelung aufweist. Soweit verschiedene Regel- bzw. Steuerkreise für verschiedene Bremszylinder 107 des Bremssystems 101 vorhanden sind, werden die Parameter mittels des erfindungsgemäßen Verfahrens für die verschiedenen Regel- bzw. Steuerkreise angepasst.

Durch das erfindungsgemäße Verfahren kann eine automatisierte Kalibrierung der Parameter der Bremssteuerung 115 bzw. -regelung erzielt werden, was eine manuelle Parametrierung bzw. Kalibrierung bei der Inbetriebnahme eines Fahrzeuges ersetzt und auch eine automatische Rekalibrierung während des Betriebes, beispielsweise bei einer Bremsprobe ermöglicht, um die Parameter auch im Betrieb zu adaptieren und während des laufenden Betriebes aufgetretene geänderte Systemzustände, Verschleiß, etc., berücksichtigen zu können. Die für die Parameteranpassung erforderlichen Daten, die in der Software abgebildeten Modelle des Systems, die Regelungs- bzw. Steuerungsalgorithmen und die Parameter der Bremssteuerung sowie die Parameter, die die pneumatischen Eigenschaften des Belüftungskreises und des Entlüfungskreises kennzeichnen, sind dafür im erfindungsgemäßen Bremssystem in einem Speicher abgelegt.

### BEZUGSZEICHENLISTE

- 101: pneumatisches Bremssystem
- 103: Wagenkasten
- 105: Wagenrad
- 107: Bremszylinder
- 109: Druckleitung
- 111: Bremsventile
- 113: Druckversorgung
- 115: Bremssteuerung
- 117: Druckmesseinrichtungen am Ventil
- 119: Druckmesseinrichtungen am Bremszylinder

- 201: Belüften des Bremszylinders
- 203: Messung des Druckanstiegs
- 205: Ermitteln der pneumatischen Eigenschaften des Belüftungskreises
- 207: Entlüften des Bremszylinders
- 209: Messung des Druckabfalls
- 211: Ermitteln der pneumatischen Eigenschaften des Entlüftungskreises
- 213: Einstellung der Parameter der Bremssteuerung bzw. Bremsregelung
- 215: Softwaremodelle

## Patentansprüche

1. Verfahren zum automatisierten Kalibrieren eines pneumatischen Bremssystems (101), **gekennzeichnet durch** die folgenden Schritte:
Belüften (201) eines Bremszylinders (107) des pneumatischen Bremssystems (101) mit bekanntem Öffnungsgrad eines dem Bremszylinder (107) zugeordneten Ventils (111),
Messen (203) des Druckanstiegs am Ventil (111) oder im Bremszylinder (107) oder entlang des pneumatischen Wirkpfads zwischen Ventil (111) und Bremszylinder (107) und Ermitteln der Zeit, nach der sich ein stabiler Zustand des Druckes am Ventil (111) oder im Bremszylinder (107) oder entlang des pneumatischen Wirkpfads zwischen Ventil (111) und Bremszylinder (107) einstellt,
Ermitteln (205) der pneumatischen Eigenschaften des Belüftungskreises anhand des gemessenen Druckverlaufs und der Zeit, nach der sich der stabile Zustand einstellt, unter Verwendung von Softwaremodellen (215) des Bremssystems (101),
Entlüften (207) des Bremszylinders (107) des pneumatischen Bremssystems (101) mit bekanntem Öffnungsgrad des dem Bremszylinder (107) zugeordneten Ventils (111),
Messen (209) des Druckabfalls am Ventil (111) oder im Bremszylinder (107) oder entlang des pneumatischen Wirkpfads zwischen Ventil (111) und Bremszylinder (107) und Ermitteln der Zeit, nach der sich ein stabiler Zustand des Druckes am Ventil (111) oder im Bremszylinder (107) oder entlang des pneumatischen Wirkpfads zwischen Ventil (111) und Bremszylinder (107) einstellt,
Ermitteln (211) der pneumatischen Eigenschaften des Entlüftungskreises anhand des gemessenen Druckverlaufs und der Zeit, nach der sich der stabile Zustand einstellt, unter Verwendung der Softwaremodelle (215) des Bremssystems (101),
automatisiertes Einstellen (213) von Parametern der Bremssteuerung (115) des pneumatischen Bremssystems (101) anhand der gemessenen Daten, der ermittelten pneumatischen Eigenschaften des Belüftungskreises und des Entlüftungskreises sowie der Softwaremodelle (215) des Bremssystems (101).

2. Verfahren nach Anspruch 1, wobei das pneumatische Bremssystem (101) mehrere Bremszylinder (107) und diesen zugeordnete Ventile (111) aufweist, und wobei die Messungen (203, 209) des Druckanstiegs und des Druckabfalls an mehreren Ventilen (111) oder in mehreren Bremszylindern (107) vorgenommen werden.

3. Verfahren nach Anspruch 1 oder 2, wobei die Messungen (203, 209) des Druckanstiegs und des Druckabfalls am Ventil (111) oder an mehreren Ventilen (111) und am Bremszylinder (107) oder an mehreren Bremszylindern (107) vorgenommen werden.

4. Verfahren zum automatisierten Kalibrieren eines pneumatischen Bremssystems (101), **gekennzeichnet durch** die folgenden Schritte:
Belüften (201) eines Bremszylinders (107) des pneumatischen Bremssystems (101) mit bekanntem Öffnungsgrad eines dem Bremszylinder (107) zugeordneten Ventils (111),
Messen des Bremsmomentes und Ermitteln der Zeit, nach der sich ein stabiler Zustand des Bremsmomentes einstellt,
Ermitteln (205) der pneumatischen Eigenschaften des Belüftungskreises anhand des gemessenen Bremsmomentes und der Zeit, nach der sich der stabile Zustand einstellt, unter Verwendung von Softwaremodellen (215) des Bremssystems (101),
Entlüften (207) des Bremszylinders (107) des pneumatischen Bremssystems (101) mit bekanntem Öffnungsgrad des dem Bremszylinder (107) zugeordneten Ventils (111),
Messen des Bremsmomentes und Ermitteln der Zeit, nach der sich ein stabiler Zustand des Bremsmomentes einstellt,
Ermitteln (211) der pneumatischen Eigenschaften des Entlüftungskreises anhand des gemessenen Bremsmomentes und der Zeit, nach der sich der stabile Zustand einstellt, unter Verwendung der Softwaremodelle (215) des Bremssystems (101),
automatisiertes Einstellen (213) von Parametern der Bremssteuerung (115) des pneumatischen Bremssystems (101) anhand der gemessenen Daten, der ermittelten pneumatischen Eigenschaften des Belüftungskreises und des Entlüftungskreises sowie der Softwaremodelle (215) des Bremssystems (101).

5. Verfahren nach einem der vorangehenden Ansprüche, wobei die Messungen (203, 209) der Druckverläufe bzw. des Bremsmomentes des Weiteren auch für während des Betriebes vorkommende Schaltstellungen der Ventile (111) vorgenommen werden.

6. Verfahren nach einem der vorangehenden Ansprüche, wobei die Messungen (203, 209) der Druckverläufe bzw. des Bremsmomentes des Weiteren auch für während des Betriebes vorkommende Steuerungs- oder Regelungsroutinen der Ventile (111) vorgenommen werden.

7. Verfahren nach einem der vorangehenden Ansprüche, wobei die Ventileigenschaften sowie die aktuelle Leistungsfähigkeit des lokalen Bremssystems an übergeordnete Komponenten und Regelungen gemeldet werden.

8. Verfahren nach einem der vorangehenden Ansprüche, wobei das automatisierte Kalibrieren des pneumatischen Bremssystems (101) während der Inbetriebnahme eines mit dem Bremssystem (101) versehenen Fahrzeugs vorgenommen wird.

9. Verfahren nach einem der vorangehenden Ansprüche, wobei das automatisierte Kalibrieren des pneumatischen Bremssystems (101) während der Bremsprobe eines mit dem Bremssystem (101) versehenen Fahrzeugs vorgenommen wird.

10. Automatisiert kalibrierbares pneumatisches Bremssystem (101), aufweisend
einen Bremszylinder (107),
ein dem Bremszylinder (107) zugeordnetes Ventil (111),
einen Belüftungskreis,
einen Entlüftungskreis,
Messvorrichtungen (117) zum Messen von Druckverläufen am Ventil (111) und/oder im Bremszylinder (107) und/oder entlang des pneumatischen Wirkpfads zwischen Ventil (111) und Bremszylinder (107),
Softwaremodelle (215) des Bremssystems (101),
eine Bremssteuerung (115),
eine Speichervorrichtung zum Abspeichern der Messdaten, der Softwaremodelle (215), der Parameter der Softwaremodelle (215), der Parameter des Belüftungskreises und des Entlüftungskreises, der Regelungs- und Steuerungsalgorithmen der Bremssteuerung (115) sowie der Parameter der Bremssteuerung (115),
eine Vorrichtung zum automatisierten Anpassen der Parameter der Bremssteuerung (115) anhand der gespeicherten Daten,
wobei das Bremssystem (101) eine Steuereinrichtung zum Durchführen eines Verfahrens zum automatisierten Kalibrieren nach einem der Ansprüche 1 bis 3 und 5 bis 9 aufweist.

11. Automatisiert kalibrierbares pneumatisches Bremssystem (101), aufweisend
einen Bremszylinder (107),
ein dem Bremszylinder (107) zugeordnetes Ventil (111),
einen Belüftungskreis,
einen Entlüftungskreis,
Messvorrichtungen zum Messen des Bremsmomentes,
Softwaremodelle (215) des Bremssystems (101),
eine Bremssteuerung (115),
eine Speichervorrichtung zum Abspeichern der Messdaten, der Softwaremodelle (215), der Parameter der Softwaremodelle (215), der Parameter des Belüftungskreises und des Entlüftungskreises, der Regelungs- und Steuerungsalgorithmen der Bremssteuerung (115) sowie der Parameter der Bremssteuerung (115),
eine Vorrichtung zum automatisierten Anpassen der Parameter der Bremssteuerung (115) anhand der gespeicherten Daten,
wobei das Bremssystem (101) eine Steuereinrichtung zum Durchführen eines Verfahrens zum automatisierten Kalibrieren nach einem der Ansprüche 4 bis 9 aufweist.

## Claims

1. A method for the automated calibration of a pneumatic brake system (101), **characterised by** the following steps:
the aeration (201) of a brake system (107) of the pneumatic brake system (101) with a known opening degree of a valve (111) that is assigned to the brake cylinder (107),
the measurement (203) of the pressure increase at the valve (111) or in the brake cylinder (107) or along the pneumatic path between the valve (111) and the brake cylinder (107), and the determination of the time after which the pressure state at the valve (111) or in the brake cylinder (107) or along the pneumatic path between the valve (111) and the brake cylinder (107) stabilises,
the determination (205) of the pneumatic properties of the aeration circuit using the measured pressure curve and the time after which the state stabilises, using the software models (215) of the brake system (101),
the deaeration (207) of the brake cylinder (107) of the pneumatic brake system (101) with a known opening degree of the valve (111) that is assigned to the brake cylinder (107),
the measurement (209) of the pressure decrease at the valve (111) or in the brake cylinder (107) or along the pneumatic path between the valve (111) and the brake cylinder (111) and the determination of the time after which the pressure state at the valve (111) or in the brake cylinder (107) or along the pneumatic path between the valve (111) and the brake cylinder (107) stabilises,
the determination (211) of the pneumatic properties of the deaeration circuit using the measured pressure curve and the time after which the state stabilises, using the software models (215) of the brake system (101),
the automated adjustment (213) of parameters of the brake control system (115) of the pneumatic brake system (101) using the data measured, the pneumatic aeration and deaeration circuit properties determined and the software models (215) of the brake system (101).

2. A method according to claim 1, the pneumatic brake system (101) having a plurality of brake cylinders (107) having assigned valves (111), and the measurement (203, 209) of the pressure increase and the pressure decrease being carried out at a plurality of valves (111) or in a plurality of brake cylinders (107).

3. A method according to claim 1 or 2, the measurement (203, 209) of the pressure increase and the pressure decrease being carried out at the valve (111) or at a plurality of valves (111) or at the brake cylinder (107) or at a plurality of brake cylinders (107).

4. A method for the automated calibration of a pneumatic brake system (101), **characterised by** the following steps:
the aeration (201) of a brake system (107) of the pneumatic brake system (101) with a known opening degree of a valve (111) that is assigned to the brake cylinder (107),
the measurement of the brake torque and the determination of the time after which the brake torque state stabilises,
the determination (205) of the pneumatic properties of the aeration circuit using the measured brake torque and the time after which the state stabilises, using the software models (215) of the brake system (101),
the deaeration (207) of the brake cylinder (107) of the pneumatic brake system (101) with a known opening degree of the valve (111) that is assigned to the brake cylinder (107),
the measurement of the brake torque and the determination of the time after which the brake torque state stabilises,
the determination (211) of the pneumatic properties of the deaeration circuit using the measured brake torque and the time after which the state stabilises, using the software models (215) of the brake system (101),
the automated adjustment (213) of parameters of the brake control system (115) of the pneumatic brake system (101) using the data measured, the pneumatic aeration and deaeration circuit properties determined and the software models (215) of the brake system (101).

5. A method according to any one of the preceding claims, the measurements (203, 209) of the pressure curves or the brake torque also being carried out for switch positions of the valves (111) occurring during operation.

6. A method according to any one of the preceding claims, the measurements (203, 209) of the pressure curves or the brake torque also being carried out for control and regulation routines of the valves (111) occurring during operation.

7. A method according to any one of the preceding claims, the valve properties and the performance of the local brake system at a given time being notified to higher-level components and control systems.

8. A method according to any one of the preceding claims, the automated calibration of the pneumatic brake system (101) being carried out during commissioning of a vehicle that is equipped with the brake system (101).

9. A method according to any one of the preceding claims, the automated calibration of the pneumatic brake system (101) being carried out during brake testing of a vehicle that is equipped with the brake system (101).

10. An automated calibratable pneumatic brake system (101) having:
a brake cylinder (107),
a valve (111) that is assigned to the brake cylinder (107),
an aeration circuit,
a deaeration circuit,
measuring devices (117) for measuring pressure curves at the valve (111) and/or in the brake cylinder (107) and/or along the pneumatic path between the valve (111) and the brake cylinder (107),
software models (215) of the brake system (101),
a brake control system (115),
a storage device for storing the measurement data, the software models (215), the parameters of the software models (215), the parameters of the aeration and deaeration circuits, the regulation and control algorithms of the brake control system (115) and the parameters of the brake control system (115),
a device for the automated adjustment of the parameters of the brake control system (115) using the stored data,
the brake system (101) having a control device for carrying out a method for automated calibration according to any one of claims 1 to 3 and 5 to 9.

11. An automated calibratable pneumatic brake system (101) having:
a brake cylinder (107),
a valve (111) that is assigned to the brake cylinder (107),
an aeration circuit,
a de-aeration circuit,
measuring devices for measuring braking torque,
software models (215) of the brake systems (101),
a brake control system (115),
a storage device for storing the measurement data, the software models (215), the parameters of the software models (215), the parameters of the aeration and deaeration circuits, the regulation and control algorithms of the brake control system (115) and the parameters of the brake control system (115),
a device for the automated adjustment of the parameters of the brake control system (115) using the stored data,
the brake system (101) having a control device for carrying out a method for automated calibration according to any one of claims 4 to 9.

## Revendications

1. Procédé d'étalonnage automatisé d'un système (101) pneumatique de frein, **caractérisé par** les stades suivants :
alimentation (201) en air d'un cylindre (107) de frein du système (101) pneumatique de frein avec un degré d'ouverture connu d'une vanne (111) associé au cylindre (107) de frein,
mesure (203) de l'élévation de la pression à la vanne (111) ou au cylindre (107) de frein ou le long du trajet actif pneumatique entre la vanne (111) et le cylindre (107) de frein et détermination du temps après lequel s'établit un état stable de la pression à la vanne (111) ou au cylindre (107) de frein ou le long du trajet actif pneumatique entre la vanne (111) et le cylindre (107) de frein,
détermination (205) des propriétés pneumatiques du circuit d'alimentation en air à l'aide de la courbe de pression mesurée et du temps après lequel s'établit l'état stable, en utilisant des modèles (215) logiciels du système (101) de frein,
purge (207) du cylindre (107) de frein du système (101) pneumatique de frein avec un degré d'ouverture connu de la vanne (111) associée au cylindre (107) de frein,
mesure (209) de la chute de pression à la vanne (111) ou au cylindre (107) de frein ou le long du trajet actif pneumatique entre la vanne (111) et le cylindre (107) de frein et détermination du temps après lequel s'établit un état stable de la pression à la vanne (111) ou au cylindre (107) de frein ou le long du trajet actif pneumatique entre la vanne (111) et le cylindre (107) de frein,
détermination (211) des propriétés pneumatiques du circuit de purge à l'aide de la courbe de pression mesurée et du temps après lequel s'établit l'état stable, en utilisant les modèles (215) logiciels du système (101) de frein,
réglage (213) automatisé de paramètres de commande (115) de frein du système (101) pneumatique de frein à l'aide des données mesurées, des propriétés pneumatiques déterminées du circuit d'alimentation en air et du circuit de purge, ainsi que des modèles (215) logiciels du système (101) de frein.

2. Procédé suivant la revendication 1, dans lequel le système (101) pneumatique de frein a plusieurs cylindres (107) de frein et vannes (111) qui leur sont associées et dans lequel on effectue les mesures (203, 209) de l'élévation de la pression et de la chute de pression sur plusieurs vannes (111) ou dans plusieurs cylindres (107) de frein.

3. Procédé suivant la revendication 1 ou 2, dans lequel on effectue les mesures (203, 209) de l'élévation de la pression et de la chute de pression à la vanne (111) ou aux plusieurs vannes (111) ou au cylindre (107) de frein ou aux plusieurs cylindres (107) de frein.

4. Procédé d'étalonnage automatisé d'un système (101) pneumatique de frein, **caractérisé par** les stades suivants :
alimentation (201) en air d'un cylindre (107) de frein du système (101) pneumatique de frein avec un degré d'ouverture connu d'une vanne (111) associé au cylindre (107) de frein,
mesure du couple de freinage et détermination du temps après lequel s'établit un état stable du couple de freinage,
détermination (205) des propriétés pneumatiques du circuit d'alimentation en air à l'aide du couple de freinage mesuré et du temps après lequel s'établit l'état stable, en utilisant des modèles (2015) logiciels du système (101) de frein,
purge (207) du cylindre (107) de frein du système (101) pneumatique de frein avec un degré d'ouverture connu de la vanne (111) associée au cylindre (107) de frein,
mesure du couple de freinage et détermination du temps après lequel s'établit un état stable du couple de freinage,
détermination (211) des propriétés pneumatiques du circuit de purge à l'aide du couple de freinage mesuré et du temps après lequel s'établit un état stable, en utilisant les modèles (215) logiciels du système (101) de frein,
réglage (213) automatisé de paramètres de commande (115) de frein du système (101) pneumatique de frein à l'aide des données mesurées, des propriétés pneumatiques déterminées du circuit d'alimentation en air et du circuit de purge, ainsi que des modèles (215) logiciels du système (101) de frein.

5. Procédé suivant l'une des revendications précédentes, dans lequel on effectue des mesures (203, 209) des courbes de pression ou du couple de freinage, en outre également pour des positions de commutation des vannes (111) se produisant pendant le fonctionnement.

6. Procédé suivant l'une des revendications précédentes, dans lequel on effectue les mesures (203, 209) des courbes de pression ou du couple de freinage, en outre également pour des routines de commande ou de réglage des vannes (111) se produisant pendant le fonctionnement.

7. Procédé suivant l'une des revendications précédentes, dans lequel on annonce les propriétés de vannee, ainsi que la capacité de puissance instantanée du système local de frein, à des composants et des régulations supérieurs hiérarchiquement.

8. Procédé suivant l'une des revendications précédentes, dans lequel on effectue l'étalonnage automatisé du système (101) pneumatique de frein pendant la mise en service d'un véhicule pourvu du système (101) de frein.

9. Procédé suivant l'une des revendications précédentes, dans lequel on effectue l'étalonnage automatisé du système (101) pneumatique de frein pendant l'essai de freinage d'un véhicule pourvu du système (101) de frein.

10. Système (101) pneumatique de frein automatisé pouvant être étalonné, comportant :
un cylindre (107) de frein,
une vanne (111) associée au cylindre (107) de frein,
un circuit d'alimentation en air,
un circuit de purge,
des systèmes (117) de mesure pour mesurer des courbes de pression à la vanne (111) et/ou au cylindre (107) de frein et/ou le long du trajet actif pneumatique entre la vanne (111) et le cylindre (107) de frein,
des modèles (215) logiciels du système (101) de frein,
une commande (115) de frein,
un dispositif de mémoire pour mettre en mémoire les données de mesure, les modèles (215) logiciels, les paramètres des modèles (215) logiciels, les paramètres du circuit d'alimentation en air et du circuit de purge, les algorithmes de régulation et de commande de la commande (115) de frein, ainsi que les paramètres de la commande (115) de frein,
un dispositif d'adaptation automatisée des paramètres de la commande (115) de frein à l'aide des données mises en mémoire,
dans lequel le système (101) de frein a un dispositif de commande pour effectuer un procédé d'étalonnage automatisé suivant l'une des revendications 1 à 3 et 5 à 9.

11. Système (101) pneumatique de frein automatisé pouvant être étalonné, comportant :
un cylindre (107) de frein,
une vanne (111) associée au cylindre (107) de frein,
un circuit d'alimentation en air,
un circuit de purge,
des dispositifs de mesure du couple de freinage,
des modèles (215) logiciels du système (101) de frein,
une commande (115) de frein,
un dispositif de mémoire pour mettre en mémoire les données de mesure, les modèles (215) logiciels, les paramètres des modèles (215) logiciels, les paramètres du circuit d'alimentation en air et du circuit de purge, les algorithmes de régulation et de commande de la commande (115) de frein, ainsi que les paramètres de la commande (115) de frein,
un dispositif d'adaptation automatisée des paramètres de la commande (115) de frein à l'aide des données mises en mémoire,
dans lequel le système (101) de frein a un dispositif de commande pour effectuer un procédé d'étalonnage automatisé suivant l'une des revendications 4 à 9.
